# EUROPÄISCHE PATENTSCHRIFT

(11) **EP 2 556 936 B1**
(45) Veröffentlichungstag und Bekanntmachung des Hinweises auf die Patenterteilung: **03.02.2016**
(21) Anmeldenummer: 12153778.1
(22) Anmeldetag: 03.02.2012
(51) Int. Cl.: B29C 39/10, B29C 39/26, B29C 39/24, B29L 7/00, B29L 31/00, B29K 75/00

(54) **Verfahren zum Umgießen eines Kantelkerns oder Türrohlings**
Method for overmoulding a panel core or a door blank
Procédé de surmoulage d'une âme de panneau ou d'une ébauche de porte

(30) Priorität: 12.07.2011 AT 39411 U
(43) Veröffentlichungstag der Anmeldung: 13.02.2013
(73) Patentinhaber: PIENO GmbH, 4152 Sarleinsbach (AT)
(72) Erfinder: Pilsl, Mario, 4152 Sarleinsbach (AT)
(74) Vertreter: KLIMENT & HENHAPEL

(56) Entgegenhaltungen:
- EP-A1- 2 335 526
- EP-A2- 1 496 189
- DE-A1- 3 817 224
- GB-A- 2 180 787
- US-A- 3 761 554
- US-B1- 6 290 202

## Beschreibung

Die vorliegende Erfindung betrifft ein Verfahren zum Umgießen bzw. Ummanteln eines, bevorzugt profilierten, Kantelkerns, wobei sich die Längsachse des Kantelkerns entlang einer Höhenrichtung erstreckt und der Querschnitt des Kantelkerns normal auf die Längsachse in einer Ebene liegt, die von einer Tiefenrichtung und einer Breitenrichtung aufgespannt wird, und wobei insbesondere der Kantelkern in Tiefenrichtung gesehen von einer äußeren Stirnseite und einer darauf folgenden inneren Stirnseite begrenzt wird, oder zum Umgießen bzw. Ummanteln eines Türrohlings, welcher zwei Seitenkanten sowie eine untere und eine obere Kante umfasst, wobei die Kanten bevorzugt profiliert bzw. gefalzt sind, und wobei die Längsachse der oberen und unteren Kante sich bevorzugt entlang der Breitenrichtung erstreckt und die Längsachse der beiden Seitenkanten sich entlang der Höhenrichtung erstreckt und sich die Kanten weiters bevorzugt entlang einer Tiefenrichtung erstrecken, welche normal auf die Höhen- und Breitenrichtung steht, mit einem Harz-Gemisch, bevorzugt einem Polyurethan-Harz-Gemisch, wobei eine Form mit dem darin befindlichen Kantelkern oder Türrohling mit einer vorbestimmten Menge an Harz-Gemisch von unten nach oben befüllt wird.

Die vorliegende Erfindung bezieht sich außerdem auf eine Form zur Durchführung des erfindungsgemäßen Verfahrens, wobei sich die Form entlang einer Höhen-, Tiefen- und Breitenrichtung erstreckt und heizbar ist.

Des Weiteren betrifft die vorliegende Erfindung die Verwendung eines Harz-Gemisches im erfindungsgemäßen Verfahren.

Schließlich bezieht sich die vorliegende Erfindung auf einen Türrohling und dessen Verwendung im erfindungsgemäßen Verfahren.

### STAND DER TECHNIK

Bei der Herstellung von Verschlussorganen für Gebäudeöffnungen, wie z.B. von Türblättern und Fensterflügeln, und/oder deren Rahmen, wie z.B. Türstock (auch Türzarge genannt) oder Fensterstock, kommen zunehmend ummantelte Kanteln zum Einsatz. Diese bestehen aus einem, bevorzugt profilierten, Kern aus Holzmaterial, insbesondere Voll- oder Verbundholz, sowie einer Ummantelung, insbesondere aus einem Polyurethan (PU)-Harz-Gemisch. Die Ummantelung soll einen Schutz des Kerns, z.B. vor Feuchtigkeit oder auch mechanischer Einwirkung, gewährleisten und ist daher bevorzugt allseitig oder vollumfänglich ausgeführt. Dabei ist es wichtig, eine dauerhafte Verbindung zwischen Holzmaterial und Ummantelung zu gewährleisten, bevorzugt ohne Zuhilfenahme einer Klebung mittels Fremd-Klebstoff oder einer Leimung.

Hierzu schlägt die EP 1496189 B1 vor, dem Holzmaterial des Kerns zunächst Luft und Feuchtigkeit mittels Unterdruck zu entziehen, sodass das Holzmaterial einen Feuchtigkeitsgehalt von unter 10 Gewichtsprozent aufweist. Anschließend soll das Holzmaterial des Kerns von dessen Oberfläche her so behandelt werden, dass das Holzmaterial einen Anteil von 2 bis 5 Gewichtsprozent hydrophoben Öls aufweist. Hierauf erfolgt die Ummantelung durch Umgießen mit einem PU-, Polyester- oder Acrylharz unter leichtem Unterdruck, wobei der Kern in einem Winkel von 3° bis 10° zur Horizontalen ausgerichtet ist. Dies soll Blasenbildung vermeiden, die beispielsweise durch Restluft verursacht wird, welche aufgrund der Reaktionswärme beim Aushärten aus den Poren an die Oberfläche kommt.

Als nachteilig am in der EP 1496189 B1 offenbarten Verfahren muss die notwendige Vorbehandlung des Holzmaterials mit hydrophobem Öl angesehen werden, da dies zeitaufwendig ist und einen zusätzlichen Verfahrensschritt darstellt. Gleiches gilt für das notwendige Einstellen eines Feuchtigkeitsgehalts von weniger als 10 Gewichtsprozent mittels Unterdruck sowie für das Umgießen des Kerns unter leichtem Unterdruck.

Aus der EP 2 335 526 A1 ist ein Verfahren zur Ummantelung eines Kerns aus Holz oder holzähnlichem Material mit einem Harz-Gemisch bekannt. Dabei wird der Kern in einer in Bezug auf den Boden waagrecht liegenden Gießform positioniert, wobei die Längsachse des Kerns 1 in Bezug auf den Boden waagrecht liegt, und die Gießform von unten nach oben mit dem Harz-Gemisch befüllt.

Die DE 38 17 224 A1 schlägt eine Sandwichplatte vor, bei der ein Kern aus Holzwerkstoff zwischen zwei Kunststoffschichten angeordnet ist, wobei die Kunststoffschichten durch ein Gussverfahren hergestellt werden. Zur Durchführung des Gussverfahrens weist der Kern Gießkanäle auf, welche schräg von einer Stirnseite der Sandwichplatte zu den zu gießenden Seitenflächen verläuft.

Ein Verfahren zur Ummantelung eines Kerns, bei dem der Kern waagrecht in eine Gußform eingelegt wird ist aus der US 3 761 554 A bekannt. In einem zweiten Schritt wird eine spezielle Oberfläche auf den bereits ummantelten Kern aufgegossen, wobei der ummantelte Kern gegenüber dem Boden in einem spitzen Winkel verschwenkt wird.

Die GB 2 180 787 A beschreibt ein Verfahren zur Verkapselung einer dünnen Platte mit einem durchsichtigen Polymer, wobei Stützelemente, aus dem selben durchsichtigen Polymer, die Platte in Position halten und nach dem Gussprozess in der Verkapselung verbleiben.

In der In der US 6 290 202 B1 wird ein Gießverfahren zur Herstellung dünner Platten aus Harz sowie eine Vorrichtung zur Durchführung dieses Verfahrens beschrieben. In diesem Verfahren werden die Harzplatten in, bezogen auf den Boden, in senkrecht stehenden abgeschlossenen Gießkammern von oben nach unten gegossen.

### AUFGABE DER ERFINDUNG

Die vorliegende Erfindung hat es sich daher zur Aufgabe gesetzt, ein Verfahren zum Umgießen eines Kantelkerns zur Verfügung zu stellen, welches die genannten Nachteile vermeidet. Hierzu soll der Feuchtigkeitsgehalt des Kantelkerns nicht über die für in Tischlereien verwendetes Holz üblichen Maße hinaus eingestellt werden müssen. Insbesondere soll die Notwendigkeit für eine Behandlung mit Unterdruck und/oder hydrophobem Öl vermieden werden. Das Verfahren soll analog das Umgießen eines aus mehreren Kanteln bestehenden Rohlings, insbesondere eines Türrohlings, gestatten.

### DARSTELLUNG DER ERFINDUNG

Das erfindungsgemäße Verfahren zum Umgießen bzw. Ummanteln betrifft sowohl Kantelkerne als auch Rohlinge, insbesondere Türrohlinge, welche mehrere Kantelkerne umfassen können. Dabei erstrecken sich sowohl Kantelkern als auch Türrohling entlang einer Höhen-, Tiefen- und Breitenrichtung. Der Kantelkern kann profiliert sein. Bevorzugt verläuft seine Längsachse parallel zur Höhenrichtung. Der Türrohling weist profilierte bzw. gefalzte Kanten auf, insbesondere eine obere, eine untere und zwei Seitenkanten. Die Längsachsen der Seitenkanten erstrecken sich bevorzugt entlang der Höhenrichtung. Die Längsachse der oberen und unteren Seitenkante erstreckt sich bevorzugt entlang der Breitenrichtung. In Höhenrichtung gesehen folgt die obere auf die untere Kante.

Erfindungsgemäß erfolgt die Ummantelung des Kantelkerns bzw. des Rohlings, insbesondere Türrohlings, durch Umgießen mit einem Harz-Gemisch, wie z.B. einem Polyester- oder Acryl-Harz-Gemisch, jedoch bevorzugt mit einem Polyurethan (PU)-Harz-Gemisch, in einer, bevorzugt zweiteiligen, Form. Hierbei ist vor allem darauf zu achten, dass dabei entstehende Luftbläschen nicht in der flüssigen Masse bleiben, da diese Luftbläschen ein Aufschäumen bewirken können, was wiederum zu einem Ablösen der Ummantelung vom Kantelkern bzw. Türrohling führen kann. Dieses Problem wird durch eine senkrecht stehende Form gelöst, in welcher der Kantelkern bzw. der Türrohling senkrecht stehend, d.h. mit dessen Längsachse senkrecht stehend positioniert wird. Dabei bezieht sich "senkrecht" insbesondere auf einen Boden, d.h. die Längsachse steht normal auf diesen Boden.

Die Form wird mit dem Harz-Gemisch von unten nach oben befüllt. Die senkrechte Anordnung bewirkt ein Aufsteigen allfälliger Luftbläschen. Die Form, die grundsätzlich geschlossen ist, ist an ihrer Oberseite offen bzw. weist an ihrer Oberseite eine Öffnung auf, sodass die Luftbläschen dort entweichen können und nicht im Ummantelungsmaterial verbleiben. Ein aufwendiges Pumpen, um die Form unter Unterdruck zu setzen, kann somit entfallen. Außerdem ist die Form auf eine Formentemperatur vorgeheizt, um ein gleichmäßiges und blasenfreies Aushärten des Harzes zu ermöglichen. Begünstigt wird ein gleichmäßiges und damit blasenfreies Aushärten durch den Einsatz einer Aluminiumform, da Aluminium ein ausgezeichneter Wärmeleiter ist und die Wärme entsprechend gut auf das Harz-Gemisch übertragen wird. Nach einer Aushärtezeit von ca. 30 Minuten kann die Form geöffnet und der ummantelte Kantelkern bzw. Türrohling herausgenommen werden.

Entsprechend ist bei einem erfindungsgemäßen Verfahren zum Umgießen bzw. Ummanteln eines, bevorzugt profilierten, Kantelkerns, wobei sich die Längsachse des Kantelkerns entlang einer Höhenrichtung erstreckt und der Querschnitt des Kantelkerns normal auf die Längsachse in einer Ebene liegt, die von einer Tiefenrichtung und einer Breitenrichtung aufgespannt wird, und wobei insbesondere der Kantelkern in Tiefenrichtung gesehen von einer äußeren Stirnseite und einer darauf folgenden inneren Stirnseite begrenzt wird, oder zum Umgießen bzw. Ummanteln eines Türrohlings, welcher zwei Seitenkanten sowie eine untere und eine obere Kante, umfasst, wobei die Kanten bevorzugt profiliert bzw. gefalzt sind, und wobei die Längsachse der oberen und unteren Kante sich bevorzugt entlang einer Breitenrichtung erstreckt und die Längsachse der beiden Seitenkanten sich entlang einer Höhenrichtung erstreckt und sich die Kanten weiters bevorzugt entlang einer Tiefenrichtung erstrecken, welche normal auf die Höhen- und Breitenrichtung steht, mit einem Harz-Gemisch, bevorzugt einem Polyurethan-Harz-Gemisch, wobei eine Form (27) mit dem darin befindlichen Kantelkern (5) oder Türrohling (10) mit einer vorbestimmten Menge an Harz-Gemisch von unten nach oben befüllt wird, vorgesehen, dass der Kantelkern oder der Türrohling mit zumindest seiner unteren Kante und den beiden Seitenkanten in einer in Bezug auf einen Boden senkrecht stehenden, nach oben hin offenen Aluminiumform positioniert wird, wobei die Längsachse des Kantelkerns oder Türrohlings in Bezug auf den Boden senkrecht steht und dass nach einer Aushärtezeit der mit dem gehärteten Harz-Gemisch ummantelte Kantelkern oder Türrohling aus der Aluminiumform herausgenommen wird.

Um ein senkrechtes Befüllen von unten nach oben zu ermöglichen, kann das PU-Harz-Gemisch über eine Angussöffnung in Form einer Füllbohrung, welche an der untersten Stelle der Form angebracht ist, eingeleitet werden. Hierbei kommt üblicherweise eine Mischdüse für das PU-Harz und einen Härter zum Einsatz, welche in die Füllbohrung formschlüssig und dicht angesetzt wird. Nachdem eine vorbestimmte Menge an flüssigem Ummantelungsmaterial in die Form eingebracht ist, wird die Angussöffnung bzw. Füllbohrung verschlossen. Entsprechend ist es bei einer bevorzugten Ausführungsform des erfindungsgemäßen Verfahrens vorgesehen, dass die Befüllung der Aluminiumform über eine Angussöffnung, die sich an der tiefsten Stelle der Aluminiumform befindet, erfolgt, wobei die Angussöffnung nach dem Füllen verschlossen wird.

Insbesondere bei Türrohlingen, die eine deutlich größere Abmessung entlang der Breitenrichtung aufweisen als ein einzelner Kantelkern, ist darauf zu achten, dass die Befüllung über die gesamte Breitenrichtung gleichmäßig erfolgt. Es soll also vermieden werden, dass in Abhängigkeit von der Breitenrichtung die Füllhöhe des eingefüllten Harz-Gemisches unterschiedlich ausfällt. Idealerweise erfolgt das Befüllen daher in Breitenrichtung gesehen von der Mitte her.

Eine Methode, um eine solche mittige Befüllung zu gewährleisten, ist die Befüllung durch den Türrohling hindurch. Hierzu weist der Türrohling in Breitenrichtung gesehen in der Mitte seiner oberen und seiner unteren Kante jeweils ein Loch auf. Diese Löcher sind mit einem Gießkanal, der im Inneren des Türrohlings verläuft verbunden. Das Harz-Gemisch kann auf diese Weise von oben in das obere Loch eingeleitet werden, um durch den Gießkanal und das untere Loch an die unterste Stelle der Aluminiumform - und in Breitenrichtung gesehen in die Mitte der Aluminiumform - geleitet zu werden.

Von dort verteilt sich das Harz-Gemisch gleichmäßig entlang der Breitenrichtung und steigt sodann von unten nach oben auf. Entsprechend ist es bei einer weiteren Ausführungsform des erfindungsgemäßen Verfahrens vorgesehen, dass bei der Befüllung das Harz-Gemisch über ein erstes Loch in der oberen Kante des Türrohlings in die Aluminiumform eingeleitet wird, wobei vorzugsweise die Lochachse des ersten Lochs parallel zur Höhenrichtung verläuft und in Breitenrichtung, sowie besonders bevorzugt auch in Tiefenrichtung, gesehen mittig in der oberen Kante angeordnet ist; dass das Harz-Gemisch durch einen an das erste Loch anschließenden, senkrecht nach unten weisenden Gießkanal fließt, der im Inneren des Türrohlings angeordnet ist, vorzugsweise entlang der Längsachse des Türrohlings verläuft und bevorzugt aus Kunststoff besteht; dass das Harz-Gemisch durch ein zweites Loch in der unteren Kante des Türrohlings in die Aluminiumform austritt und in der Aluminiumform von unten nach oben steigt, wobei vorzugsweise die Lochachse des zweiten Lochs parallel zur Höhenrichtung verläuft und in Breitenrichtung, sowie besonders bevorzugt auch in Tiefenrichtung gesehen, mittig in der unteren Kante angeordnet ist.

Um diese Art der Befüllung optimal durchführen zu können, ist es bei einem Türrohling, welcher zwei Seitenkanten sowie eine untere und eine obere Kante umfasst, wobei die Kanten bevorzugt profiliert bzw. gefalzt sind, und wobei die Längsachse der oberen und unteren Kante sich bevorzugt entlang einer Breitenrichtung erstreckt und die Längsachse der beiden Seitenkanten sich entlang einer Höhenrichtung erstreckt und sich die Kanten weiters bevorzugt entlang einer Tiefenrichtung erstrecken, welche normal auf die Höhen- und Breitenrichtung steht, wobei im Inneren des Türrohlings ein Gießkanal angeordnet ist, welcher eine Eintrittsöffnung und eine Austrittsöffnung aufweist, erfindungsgemäß vorgesehen, dass der Gießkanal entlang der Längsachse des Türrohlings verläuft und bevorzugt aus Kunststoff besteht.

Außerdem ist es bei einer bevorzugten Ausführungsform des erfindungsgemäßen Türrohlings vorgesehen, dass die Eintrittsöffnung aus einem ersten Loch in der oberen Kante des Türrohlings besteht, wobei vorzugsweise die Lochachse des ersten Lochs parallel zur Höhenrichtung verläuft und in Breitenrichtung, sowie besonders bevorzugt auch in Tiefenrichtung, gesehen mittig in der oberen Kante angeordnet ist, und dass die Austrittsöffnung aus einem zweiten Loch in der unteren Kante des Türrohlings besteht, wobei vorzugsweise die Lochachse des zweiten Lochs parallel zur Höhenrichtung verläuft und in Breitenrichtung, sowie besonders bevorzugt auch in Tiefenrichtung, gesehen mittig in der unteren Kante angeordnet ist.

Für den Fall, dass die Aluminiumform oben offen ist und die obere Kante des Türrohlings sich nicht vollständig in der Aluminiumform befindet, kann eine Ummantelung der oberen Kante trotzdem durchgeführt werden. Dies ist dann möglich, wenn die obere Kante einerseits seitlich, d.h. in Breitenrichtung, von der Aluminiumform begrenzt wird, und sich andererseits die Außen- und Innenplatte des Türrohlings so weit in Höhenrichtung erstrecken, dass sie über den - in Tiefenrichtung gesehen - zwischen ihnen liegenden Bereich der oberen Kante hinaus ragen. Hierdurch wird über der diesem Bereich zugehörigen Oberfläche der oberen Kante ein mit Harz-Gemisch befüllbares Volumen gebildet.

Daher ist es bei einer besonders bevorzugten Ausführungsform des erfindungsgemäßen Türrohlings vorgesehen, dass der Türrohling eine Außenplatte und eine Innenplatte, die bevorzugt jeweils von einer HPL-Platte gebildet werden, aufweist, und dass sich die Außen- und die Innenplatte entlang der Höhenrichtung über einen zwischen ihnen liegenden Bereich der oberen Kante erstrecken, um in Tiefenrichtung gesehen ein mit Harz-Gemisch befüllbares Volumen entlang der gesamten Erstreckung der oberen Kante in Breitenrichtung zu begrenzen.

Schließlich ist erfindungsgemäß die Verwendung eines solchen erfindungsgemäßen Türrohlings im erfindungsgemäßen Verfahren vorgesehen.

In Versuchen hat sich gezeigt, dass besonders gute Ergebnisse hinsichtlich eines gleichmäßigen und blasenfreien Aushärtens des Harz-Gemisches erzielt werden, wenn die Formentemperatur mindestens 70°C beträgt. Entsprechend sieht eine bevorzugte Ausführungsform des erfindungsgemäßen Verfahrens vor, dass die Aluminiumform auf eine Formentemperatur vorgeheizt ist, und dass die Formentemperatur mindestens 70°C beträgt.

Um ein bequemes Positionieren des Kantelkerns bzw. Türrohlings in der Form zu ermöglichen, umfasst eine bevorzugte Variante der Aluminiumform eine bewegliche erste Formhälfte und eine unbewegliche zweite Formhälfte. Die zweite Formhälfte ist bezüglich eines Bodens senkrecht mittels einer Halterung an einer Wand fix montiert. Die Bewegung der ersten Formhälfte erfolgt durch ein Drehen bzw. Kippen bzw. Klappen um eine Drehachse, welche bevorzugt parallel zur Breitenrichtung verläuft. Auf diese Weise kann die erste Formhälfte auf die zweite Formhälfte zu bzw. von dieser weg bewegt werden, wobei die beiden Formhälften miteinander verbindbar sind.

So kann z.B. im ausgeklappten Zustand bequem ein Kantelkern bzw. Türrohling in der ersten Formhälfte positioniert und, bevorzugt mittels Schrauben, fixiert werden. Über Positionsnasen, die beispielsweise an der Innenwand der ersten Formhälfte angeordnet sind, wird dabei sichergestellt, dass ein Mindestabstand zwischen Kantelkern bzw. Türrohling und der Innenwand der ersten Formhälfte gewahrt bleibt. Anschließend wird die Form durch Drehen bzw. Kippen bzw. Klappen der ersten Formhälfte auf die zweite Formhälfte geschlossen.

Denkbar ist natürlich auch den Kantelkern bzw. den Türrohling in der zweiten Formhälfte zu positionieren und dann die zweite Formhälfte durch Zuklappen der ersten Formhälfte zu verschließen. Auch in diesem Fall kann der Kantelkern bzw. Türrohling, bevorzugt über Schrauben, in der zweiten Formhälfte fixiert werden. Außerdem kann grundsätzlich über Positionsnasen, die beispielsweise an der Innenwand der zweiten Formhälfte angeordnet sind, auch ein Mindestabstand zwischen Kantelkern bzw. Türrohling und zweiter Formhälfte eingestellt werden. Jedenfalls steht im geschlossenen Zustand der Kantelkern bzw. der Türrohling bezüglich des Bodens senkrecht in der Form.

Vor dem Befüllen wird die erste Formhälfte noch mit der zweiten Formhälfte verbunden und an dieser fixiert, bevorzugt mittels Druckluftzylindern. Daher sieht die Erfindung bei einer Form zur Durchführung eines erfindungsgemäßen Verfahrens, wobei sich die Form entlang einer Höhen-, Tiefen- und Breitenrichtung erstreckt und heizbar ist, vor, dass die Form aus Aluminium besteht und eine erste sowie eine zweite Formhälfte umfasst; dass die zweite Formhälfte in Bezug auf einen Boden senkrecht bzw. mit der Längsachse parallel zur Höhenrichtung stehend, bevorzugt an einer Wand, fixiert ist; und dass die erste Formhälfte mit der zweiten Formhälfte, bevorzugt in der Tiefenrichtung, verbindbar ist, um eine nur nach oben hin offene, sonst geschlossene Aluminiumform zu bilden, wobei bevorzugt Druckluftzylinder vorgesehen sind, um die Verbindung zwischen erster und zweiter Formhälfte zu fixieren.

Außerdem ist es bei einer bevorzugten Ausführungsform der erfindungsgemäßen Form vorgesehen, dass die erste Formhälfte an einer Drehachse, welche bevorzugt parallel zur Breitenrichtung verläuft, drehbar gelagert ist, wobei durch Drehung der ersten Formhälfte um die Drehachse die erste Formhälfte von der zweiten Formhälfte weg klappbar ist, um die Aluminiumform zu öffnen, oder auf die zweite Formhälfte zu klappbar ist, um die Aluminiumform zu schließen.

Des Weiteren ist es entsprechend den obigen Ausführungen bei einer besonders bevorzugten Ausführungsform der erfindungsgemäßen Form vorgesehen, dass in der ersten Formhälfte ein Kantelkern bzw. Türrohling positionierbar und, bevorzugt mittels Schrauben, fixierbar ist, wobei die erste Formhälfte, bevorzugt an ihrer Innenwand, Positionsnasen aufweist, um einen Mindestabstand zwischen Kantelkern bzw. Türrohling und der Innenwand der ersten Formhälfte festzulegen.

Neben der senkrechten Anordnung beim Umgießen und dem Befüllen von unten nach oben spielt das verwendete Harz-Gemisch eine wesentliche Rolle dafür, dass auf eine besondere Behandlung des Kantelkerns bzw. Türrohlings hinsichtlich dessen Feuchtigkeitsgehalts verzichtet werden kann. Daher wird ein konkretes Harz-Gemisch für das erfindungsgemäße Umgießen vorgeschlagen, welches insbesondere eine Behandlung des Kantelkerns bzw. Türrohlings mit hydrophobem Öl überflüssig macht, unabhängig aus welcher Art von Holz der Kantelkern bzw. der Türrohling aufgebaut ist.

Der Feuchtigkeitsgehalt des Holzmaterials des zu ummantelnden Kantelkerns bzw. Türrohlings kann daher typischerweise zwischen 9 und 12 Gewichtsprozent liegen, ohne dass es zu einem Aufschäumen des Harz-Gemisches kommt. Dies ist unabhängig davon, ob es sich beim Holzmaterial z.B. um Massivholz oder beispielsweise OSB-Holzbauplatten (oriented strand/structural boards), die im Wesentlichen aus ausgerichteten länglichen Spänen aufgebaut sind, handelt. Darüber hinaus wurde in Versuchen mit Kantelkernen, deren Aufbau im Wesentlichen OSB-Holzbauplatten mit einem Feuchtigkeitsgehalt von bis zu 18 Gewichtsprozent umfasste, ebenfalls kein Aufschäumen festgestellt.

Versuche haben gezeigt, dass die besten Ergebnisse mit einem Harz, welches zu 70 bis 85 Gewichtsprozent, bevorzugt 75 Gewichtsprozent, aus Polyetherpolyesterpolyol besteht, erzielt werden. Der Rest besteht aus dem Stand der Technik bekannten Additiven und Füllstoffen.

Dieses Harz wird mit einem Härter, der zu 75 bis 100 Gewichtsprozent aus Diphenylmethandiisocyanat und/oder dessen Isomeren und/oder dessen Homologen besteht, im Gewichtsverhältnis von 100 zu 32 bzw. im Volumsverhältnis von 100 zu 36 gemischt. Dieses zweikomponentige System ist mit nicht-abrasiven Füllstoffen gefüllt und ist lösungsmittelfrei.

Entsprechend ist erfindungsgemäß die Verwendung eines Harz-Gemisches umfassend ein Harz, welches zu 70 bis 85 Gewichtsprozent, bevorzugt 75 Gewichtsprozent, aus Polyetherpolyesterpolyol besteht, in einem erfindungsgemäßen Verfahren vorgesehen.

Außerdem ist erfindungsgemäß die Verwendung eines Harz-Gemisches umfassend ein Harz, welches zu 70 bis 85 Gewichtsprozent, bevorzugt 75 Gewichtsprozent, aus Polyetherpolyesterpolyol besteht, sowie einen Härter, welcher zu 75 bis 100 Gewichtsprozent aus Diphenylmethandiisocyanat und/oder Diphenylmethandiisocyanat-Isomeren und/oder Diphenylmethandiisocyanat-Homologen besteht, in einem erfindungsgemäßen Verfahren vorgesehen.

Schließlich ist erfindungsgemäß die Verwendung eines Harz-Gemisches bestehend aus einem Harz, welches zu 70 bis 85 Gewichtsprozent, bevorzugt 75 Gewichtsprozent, aus Polyetherpolyesterpolyol besteht, sowie einem Härter, welcher zu 75 bis 100 Gewichtsprozent aus Diphenylmethandiisocyanat und/oder Diphenylmethandiisocyanat-Isomeren und/oder Diphenylmethandiisocyanat-Homologen besteht, wobei Harz und Härter im Gewichtsverhältnis von 100 zu 32 gemischt sind, in einem erfindungsgemäßen Verfahren vorgesehen.

Günstigerweise weist das Harz bei 25°C eine Dichte 1,34 bis 1,38 g/ml sowie eine Viskosität von 6500 bis 9500 mPas auf. Der Härter weist bei 25°C eine Dichte von 1,20 bis 1,24 g/ml sowie eine Viskosität von 160 bis 240 mPas auf.

Im Falle einer Aushärtung von 24 h bei Raumtemperatur und 15 h bei 60°C weist das ausgehärtete Gemisch bei 25°C eine Dichte von 1,33 bis 1,37 g/ml und eine Härte von 78 bis 82 Shore-D auf und zeichnet sich durch exzellente maschinelle Bearbeitbarkeit aus. Die Glasübergangstemperatur liegt zwischen 37°C und 43°C, die Biegefestigkeit zwischen 14 und 17 MN/m², die maximale Biegung zwischen 6% und 9% und die Elastizitätsmoduln zwischen 500 und 600 MPa.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: den Querschnitt einer Stockkantel, die einen erfindungsgemäß ummantelten Kantelkern aufweist, in Verbindung mit einem Türrohling, welcher ebenfalls erfindungsgemäß ummantelt ist
- Fig. 2: die obere Kante eines zu ummantelnden Türrohlings in Aufsicht
- Fig. 3: den Querschnitt eines zu umgießenden Türrohlings, senkrecht auf die Tiefenrichtung
- Fig. 4: den Querschnitt der oberen Kante eines Türrohlings, senkrecht auf die Breitenrichtung
- Fig. 5: eine Seitenansicht einer erfindungsgemäßen Form

### WEGE ZUR AUSFÜHRUNG DER ERFINDUNG

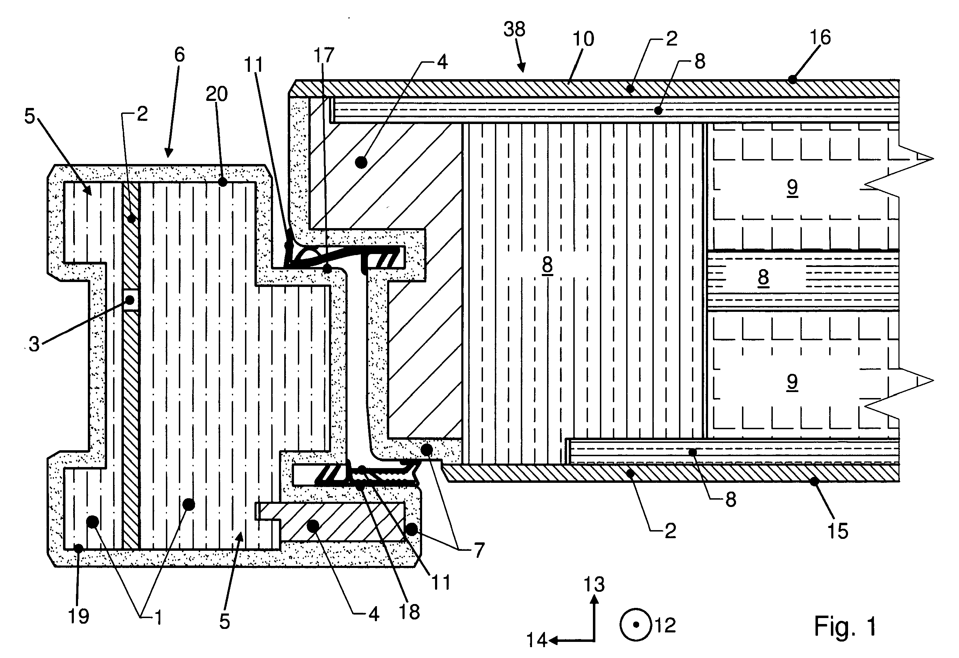

Fig. 1 zeigt eine Querschnittsansicht eines Kantelkerns 5 in einer Stockkantel 6 sowie eines über an sich bekannte Dichtungen 11 daran anliegenden Türblatts 38, welches aus einem ummantelten Türrohling 10 besteht. Die Höhenrichtung 12 steht normal auf die Zeichenebene und weist aus dieser heraus, die Tiefenrichtung 13 weist von außen nach innen. Der Kantelkern 5 besteht aus verleimten und verpressten OSB-Holzbauplatten 1 (oriented strand/structural boards), deren Späne parallel zur Tiefenrichtung 13 bzw. in einer Ebene, die durch die Tiefen- 13 und Höhenrichtung 12 aufgespannt wird, orientiert sind.

Zur Verbesserung der Stabilität sind die OSB-Holzbauplatten 1 mit einer eingeleimten HPL-Platte 2 (high pressure laminate) verpresst. Die HPL-Platte 2 liegt zur Verbesserung der Stabilität der Stockkantel 6, insbesondere hinsichtlich der Verschraubung von Schließbacken eines Schlosses, in einer Ebene, die aus Höhenrichtung 12 und Tiefenrichtung 13 aufgespannt wird, und erstreckt sich wie die OSB-Holzbauplatten 1 über die gesamte Höhe der Stockkantel 6 entlang der Höhenrichtung 12. Entlang der Breitenrichtung 14 weist die HPL-Platte 2 eine kleinere Dimensionierung als die OSB-Holzbauplatten 1 auf, da die HPL-Platte 2 härter und stabiler als die OSB-Holzbauplatten 1 ist.

Um Wärmeleitung entlang der bzw. gegen die Tiefenrichtung 13 (von außen nach innen bzw. umgekehrt) zu unterbinden, weist die HPL-Platte 2 eine Unterbrechung 3 auf. Hierbei kann es sich um eine entlang der Höhenrichtung 12 durchgehende Unterbrechung 3 handeln. D.h. die HPL-Platte 2 wird in diesem Fall durch zwei Streifen aus HPL-Material realisiert, die in der Tiefenrichtung 13 gegeneinander versetzt bzw. beabstandet angeordnet sind. Alternativ kann sich die Unterbrechung 3 nur über einen gewissen Abschnitt der HPL-Platte 2 entlang der Höhenrichtung 12 erstrecken, wobei viele solcher Unterbrechungen 3 vorhanden sind, die entlang der Tiefenrichtung 13 gegeneinander versetzt angeordnet sind und insgesamt die gesamte Erstreckung der Stockkantel 6 in Höhenrichtung 12 abdecken.

Zur Unterstützung des Türblatts 38 ist der äußerste Randbereich des Kantelkerns 5, an dem sich das Türblatt 38 abstützt, mit einem Massivholzprofil 4 versehen, welches mit einer OSB-Holzbauplatte 1 des Kantelkerns 5 verleimt und verpresst ist. Genauer, weist die Stockkantel 6 zwei Anschläge 17, 18 für das Türblatt 38 auf, die jeweils mit einer Dichtung 11 versehen sind. Der innere Anschlag 17 liegt näher zur inneren Stirnseite 20 als zur äußeren Stirnseite 19 des Kantelkerns 5; der äußere Anschlag liegt näher zur äußeren Stirnseite 19 als zur inneren Stirnseite 20 des Kantelkerns 5. Der innere Anschlag 17 wird durch eine in der Tiefenrichtung 13 relativ groß bzw. dick ausfallende OSB-Holzbauplatte 1 gebildet. Dem gegenüber fällt der äußere Anschlag 18 in der Tiefenrichtung 13 wesentlich weniger groß bzw. dick aus. Für den äußeren Anschlag 18 kommt daher ein mit dem restlichen Kantelkern 5 verleimtes und verpresstes Massivholzprofil 4 statt einer OSB-Holzbauplatte 1 zum Einsatz, da letztere deutlich weniger stabil wäre.

Der Kantelkern 5 ist entlang der Höhenrichtung 12 auf eine gewisse Dimension bzw. Erstreckung zugeschnitten. Über seine gesamte Erstreckung entlang der Höhenrichtung 12 ist der Kantelkern 5 profiliert, wobei die Profilierung üblicherweise als letzter Arbeitsschritt vor der Ummantelung erfolgt.

Der Kantelkern 5 ist ummantelt mit einer Polyurethan (PU)-Harz-Mischung. Diese PU-Harz-Ummantelung 7 findet sich auch im an die Stockkantel 6 anschließenden Bereich des Türblatts 38. In diesem Bereich weist das Türblatt 38 bzw. der Türrohling 10 ein Massivholzprofil 4 auf, welches an seiner der Stockkantel 6 zugewandten Seite mit PU-Harz ummantelt ist. Um Gewicht und Kosten zu sparen ist der Türrohling 10 gegen die Breitenrichtung 14 zunächst mit Sperrholz 8 ausgeführt. Für thermische Isolierzwecke weist der Türrohling 10 weiters Isolierkerne 9 aus expandiertem Polystyrol-Hartschaum (EPS-Hartschaum) auf, die durch Schichten aus Sperrholz 8 gegeneinander und gegenüber der Außenplatte 15 und Innenplatte 16 des Türrohlings 10 abgegrenzt sind. Außen- 15 und Innenplatte 16 werden jeweils durch eine sich über die gesamte Ausdehnung des Türrohlings 10 entlang der Höhen- 12 und Breitenrichtung 14 erstreckende HPL-Platte 2 gebildet.

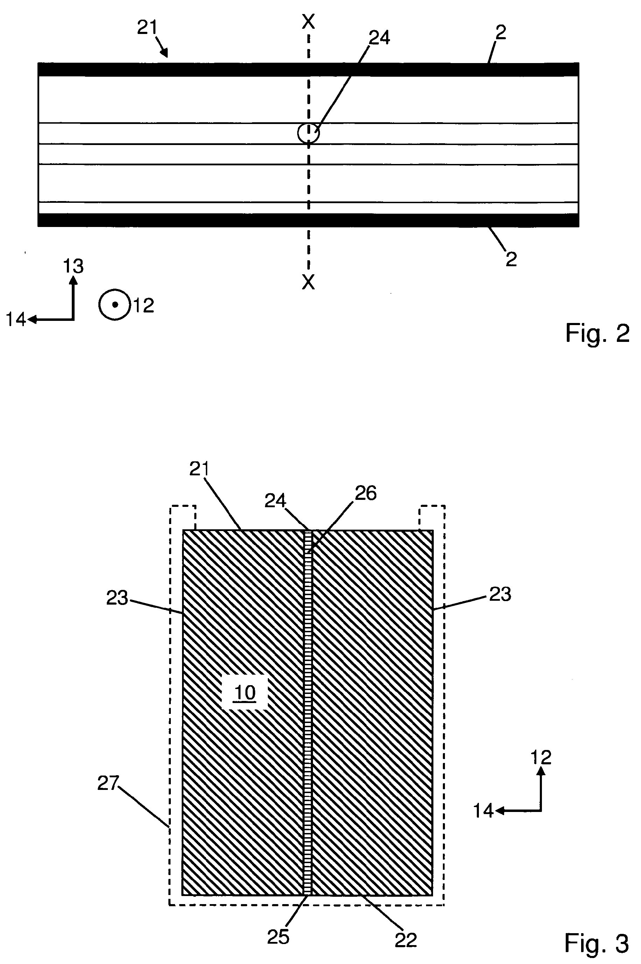

In Fig. 2 ist die obere Kante 21 des Türrohlings 10 ohne Ummantelung in Aufsicht, gegen die Höhenrichtung 12 gesehen, dargestellt. Die Längsachse der oberen Kante 21 erstreckt sich entlang der Breitenrichtung 14 und steht normal auf die Tiefenrichtung 13 und auf die Höhenrichtung 12. Erkennbar sind die HPL-Platten 2 sowie die gefalzte Struktur bzw. die Profilierung der oberen Kante 21. Außerdem ist ein erstes Loch 24 zu sehen, das bezüglich der Erstreckung der oberen Kante 21 entlang der Breitenrichtung 14 mittig angeordnet ist. Die Lochachse dieses ersten Lochs 24 verläuft parallel zur Höhenrichtung 12. In einer Ausführungsform des erfindungsgemäßen Umgieß- bzw. Ummantelungsverfahrens dient das erste Loch 24 als Einfüllöffnung für das Harz-Gemisch.

An das erste Loch 24 schließt ein Gießkanal 26 an, der im Inneren des Türrohlings 10 senkrecht nach unten, parallel zur Längsachse des Türrohlings 10 und parallel zur Höhenrichtung 12 verläuft, wie in der Schnittansicht in Fig. 3 ersichtlich ist. Das in das erste Loch 24 eingefüllte Harzgemisch fließt in der besagten Ausführungsform des erfindungsgemäßen Verfahrens also durch den Gießkanal 26 nach unten und tritt durch eine Auslassöffnung, welche durch ein zweites Loch 25 in der unteren Kante 22 gebildet wird, aus. Dabei ist die Anordnung des zweiten Lochs 25 in der unteren Kante 22 deckungsgleich mit der Anordnung des ersten Lochs 24 in der oberen Kante 21.

Von der Austrittsöffnung tritt das Harz-Gemisch in den untersten Teil einer in Fig. 3 strichliert angedeuteten Aluminiumform 27 ein und fließt zunächst in bzw. gegen die Breitenrichtung 14. Sobald das Harz-Gemisch in bzw. gegen die Breitenrichtung 14 gesehen am Rand der Aluminiumform 27 angekommen ist, beginnt es senkrecht von unten nach oben, entlang der Höhenrichtung, in der Aluminiumform 27 zu steigen. In der dargestellten Ausführungsform werden somit die untere Kante 22 und die beiden Seitenkanten 23 des Türrohlings 10 ummantelt.

Die Aluminiumform 27 überragt den Türrohling 10 und damit insbesondere dessen Seitenkanten 23 in deren Längsrichtung bzw. in Höhenrichtung 12. Für den Fall, dass die in Fig. 2 erkennbaren HPL-Platten 2 in der Höhenrichtung 12 über den zwischen ihnen liegenden Bereich der oberen Kante 21 hinaus ragen, begrenzen die HPL-Platten 2 in Tiefenrichtung 13 ein mit Harz-Gemisch befüllbares Volumen 39.

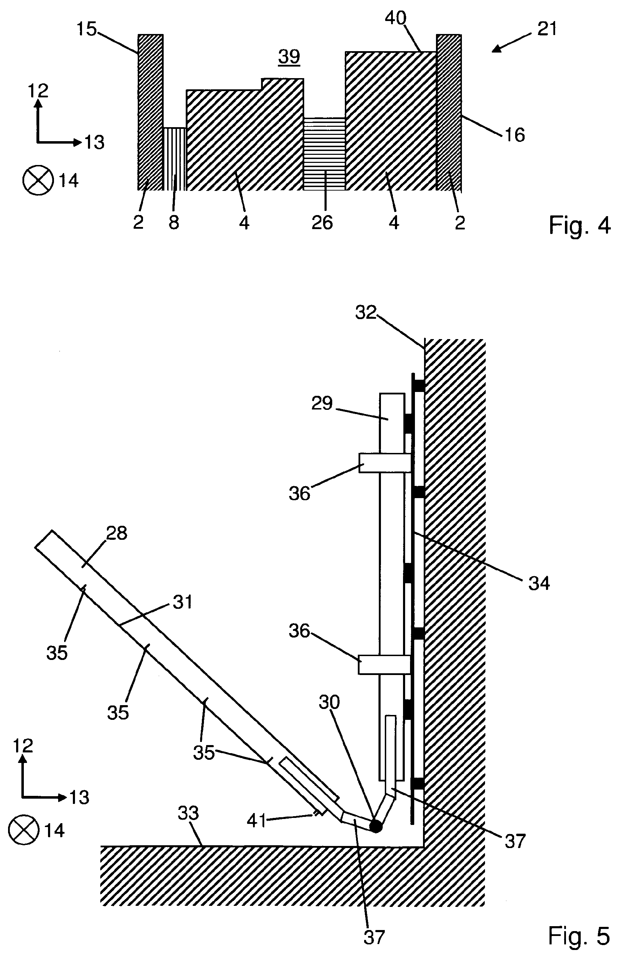

Fig. 4 illustriert diesen Fall anhand einer oberen Kante 21 in Schnittansicht normal auf die Breitenrichtung 14 gemäß der strichlierten Linie X-X in Fig. 2. Dabei sind im Aufbau der oberen Kante 21 die Außen- 15 und Innenplatte 16 bzw. die HPL-Platten 2, eine Sperrholzplatte 8, Massivholzprofile 4 und der Gießkanal 26 sichtbar. Beim Ummanteln der oberen Kante 21 wird das Volumen 39 in Breitenrichtung 14 durch die Aluminiumform 27 begrenzt; gegen die Höhenrichtung 12 wird das Volumen 39 durch die Oberfläche 40 der oberen Kante 21 im Bereich zwischen Außen- 15 und Innenplatte 16 begrenzt; nach oben ist das befüllbare Volumen 39 offen. Durch Befüllen dieses Volumens 39 mit Harz-Gemisch kann im in Fig. 3 gezeigten Ausführungsbeispiel auch die obere Kante 21 ummantelt werden.

Fig. 5 zeigt eine Ausführungsform der Aluminiumform 27 mit einer beweglichen ersten Formhälfte 28 und einer unbeweglichen zweiten Formhälfte 29, die mittels einer Halterung 34 an einer Wand 32 fix montiert ist. Die zweite Formhälfte 29 ist dabei senkrecht bezüglich eines Bodens 33 angeordnet, d.h. ihre Längsachse ist parallel zur Höhenrichtung 12. Am jeweils unteren Ende der ersten 28 und zweiten Formhälfte 29 sind Arme 37 angeordnet, die an einer Drehachse 30 enden, welche parallel zur Breitenrichtung 14 verläuft. Dabei steht die Breitenrichtung 14 normal auf die Zeichenebene und weist in diese hinein.

Die erste Formhälfte 28 ist somit um die Drehachse 30 kippbar und kann auf diese Weise auf die zweite Formhälfte zu bzw. von dieser weg bewegt werden. Im in Fig. 5 dargestellten ausgeklappten Zustand kann ein zu ummantelnder Kantelkern 5 in die erste Formhälfte 28 gelegt werden. Positionsnasen 35 gewährleisten dabei einen Mindestabstand zwischen der Innenwand 31 der ersten Formhälfte 28 und dem Kantelkern 5. Nach dem Schließen der Aluminiumform 27 durch Zuklappen der ersten Formhälfte 28 auf die zweite Formhälfte 29 wird die erste Formhälfte 28 an der zweiten Formhälfte 29 über Druckluftzylinder 36 fixiert. Der Kantelkern 5 steht nun senkrecht, d.h. seine Längsachse verläuft parallel zur Höhenrichtung 12. Über eine Angussöffnung 41, die an der tiefsten Stelle der ersten Formhälfte 28 und damit an der tiefsten Stelle der Aluminiumform 27 angeordnet ist, kann das Befüllen mit Harz-Gemisch von unten nach oben erfolgen.

### BEZUGSZEICHENLISTE

- 1: OSB-Holzbauplatte
- 2: HPL-Platte
- 3: Unterbrechung
- 4: Massivholzprofil
- 5: Kantelkern
- 6: Stockkantel
- 7: PU-Harz-Ummantelung
- 8: Sperrholz
- 9: Isolierkern
- 10: Türrohling
- 11: Dichtung
- 12: Höhenrichtung
- 13: Tiefenrichtung
- 14: Breitenrichtung
- 15: Außenplatte
- 16: Innenplatte
- 17: innerer Anschlag
- 18: äußerer Anschlag
- 19: äußere Stirnseite
- 20: innere Stirnseite
- 21: obere Kante
- 22: untere Kante
- 23: Seitenkante
- 24: erstes Loch, in oberer Kante
- 25: zweites Loch, in unterer Kante
- 26: Gießkanal
- 27: Aluminiumform
- 28: erste Formhälfte
- 29: zweite Formhälfte
- 30: Drehachse
- 31: Innenwand der ersten Formhälfte
- 32: Wand
- 33: Boden
- 34: Halterung für zweite Formhälfte
- 35: Positionsnase
- 36: Druckluftzylinder
- 37: Arm
- 38: Türblatt
- 39: Volumen
- 40: Oberfläche der oberen Kante
- 41: Angussöffnung

## Patentansprüche

1. Verfahren zum Umgießen bzw. Ummanteln eines, bevorzugt profilierten, Kantelkerns (5), wobei sich die Längsachse des Kantelkerns (5) entlang einer Höhenrichtung (12) erstreckt und der Querschnitt des Kantelkerns (5) normal auf die Längsachse in einer Ebene liegt, die von einer Tiefenrichtung (13) und einer Breitenrichtung (14) aufgespannt wird, oder zum Umgießen bzw. Ummanteln eines Türrohlings (10), welcher zwei Seitenkanten (23) sowie eine untere (22) und eine obere (21) Kante umfasst, wobei die Kanten (21, 22, 23) bevorzugt profiliert bzw. gefalzt sind, und wobei sich die Längsachse der beiden Seitenkanten (23) entlang einer Höhenrichtung (12) erstreckt, mit einem Harz-Gemisch, bevorzugt einem Polyurethan-Harz-Gemisch,
wobei eine Form (27) mit dem darin befindlichen Kantelkern (5) oder Türrohling (10) mit einer vorbestimmten Menge an Harz-Gemisch von unten nach oben befüllt wird, **dadurch gekennzeichnet, dass** der Kantelkern (5) oder der Türrohling (10) mit zumindest seiner unteren Kante (22) und den beiden Seitenkanten (23) in einer in Bezug auf einen Boden (33) senkrecht stehenden, nach oben hin offenen Aluminiumform (27) positioniert wird, wobei die Längsachse des Kantelkerns (5) oder Türrohlings (10) in Bezug auf den Boden (33) senkrecht steht und dass nach einer Aushärtezeit der mit dem gehärteten Harz-Gemisch ummantelte Kantelkern (5) oder Türrohling (10) aus der Aluminiumform (27) herausgenommen wird.

2. Verfahren nach Anspruch 1, **dadurch gekennzeichnet, dass** die Befüllung der Aluminiumform (27) über eine Angussöffnung (41), die sich an der tiefsten Stelle der Aluminiumform (27) befindet, erfolgt, wobei die Angussöffnung (41) nach dem Füllen verschlossen wird.

3. Verfahren nach Anspruch 1, **dadurch gekennzeichnet, dass** bei der Befüllung das Harz-Gemisch über ein erstes Loch (24) in der oberen Kante (21) des Türrohlings (10) in die Aluminiumform (27) eingeleitet wird; dass das Harz-Gemisch durch einen an das erste Loch (24) anschließenden, senkrecht nach unten weisenden Gießkanal (26) fließt, der im Inneren des Türrohlings (10) angeordnet ist; dass das Harz-Gemisch durch ein zweites Loch (25) in der unteren Kante (22) des Türrohlings (10) in die Aluminiumform (27) austritt und in der Aluminiumform (27) von unten nach oben steigt.

4. Verfahren nach einem der Ansprüche 1 bis 3, **dadurch gekennzeichnet, dass** die Aluminiumform (27) auf eine Formentemperatur vorgeheizt ist, und dass die Formentemperatur mindestens 70°C beträgt.

5. Form zur Durchführung eines Verfahrens gemäß einem der Ansprüche 1 bis 4, wobei sich die Form entlang einer Höhen- (12), Tiefen- (13) und Breitenrichtung (14) erstreckt und heizbar ist, **dadurch gekennzeichnet, dass** die Form aus Aluminium besteht und eine erste (28) sowie eine zweite Formhälfte (29) umfasst; dass die zweite Formhälfte (29) in Bezug auf einen Boden (33) senkrecht bzw. mit der Längsachse parallel zur Höhenrichtung (12) stehend, bevorzugt an einer Wand (32), fixiert ist; und dass die erste Formhälfte (28) mit der zweiten Formhälfte (29), bevorzugt in der Tiefenrichtung (13), verbindbar ist, um eine nur nach oben hin offene, sonst geschlossene Aluminiumform (27) zu bilden.

6. Form nach Anspruch 5, **dadurch gekennzeichnet, dass** die erste Formhälfte (28) an einer Drehachse (30), welche bevorzugt parallel zur Breitenrichtung (14) verläuft, drehbar gelagert ist, wobei durch Drehung der ersten Formhälfte (28) um die Drehachse (30) die erste Formhälfte (28) von der zweiten Formhälfte (29) weg klappbar ist, um die Aluminiumform (27) zu öffnen, oder auf die zweite Formhälfte (29) zu klappbar ist, um die Aluminiumform (27) zu schließen.

7. Form nach einem der Ansprüche 5 bis 6, **dadurch gekennzeichnet, dass** in der ersten Formhälfte (28) ein Kantelkern (5) bzw. Türrohling (10) positionierbar und fixierbar ist, wobei die erste Formhälfte, bevorzugt an ihrer Innenwand (31), Positionsnasen (35) aufweist, um einen Mindestabstand zwischen Kantelkern (5) bzw. Türrohling (10) und der Innenwand (31) der ersten Formhälfte (28) festzulegen.

8. Verwendung eines Harz-Gemisches umfassend ein Harz, welches zu 70 bis 85 Gewichtsprozent, bevorzugt 75 Gewichtsprozent, aus Polyetherpolyesterpolyol besteht, in einem Verfahren nach einem der Ansprüche 1 bis 4.

9. Verwendung eines Harz-Gemisches umfassend ein Harz, welches zu 70 bis 85 Gewichtsprozent, bevorzugt 75 Gewichtsprozent, aus Polyetherpolyesterpolyol besteht, sowie einen Härter, welcher zu 75 bis 100 Gewichtsprozent aus Diphenylmethandiisocyanat und/oder Diphenylmethandiisocyanat-Isomeren und/oder Diphenylmethandiisocyanat-Homologen besteht, in einem Verfahren nach einem der Ansprüche 1 bis 4.

10. Verwendung eines Harz-Gemisches bestehend aus einem Harz, welches zu 70 bis 85 Gewichtsprozent, bevorzugt 75 Gewichtsprozent, aus Polyetherpolyesterpolyol besteht, sowie einem Härter, welcher zu 75 bis 100 Gewichtsprozent aus Diphenylmethandiisocyanat und/oder Diphenylmethandiisocyanat-Isomeren und/oder Diphenylmethandiisocyanat-Homologen besteht, wobei Harz und Härter im Gewichtsverhältnis von 100 zu 32 gemischt sind, in einem Verfahren nach einem der Ansprüche 1 bis 4.

11. Türrohling (10), welcher zwei Seitenkanten (23) sowie eine untere (22) und eine obere (21) Kante umfasst, wobei die Längsachse der beiden Seitenkanten (23) sich entlang einer Höhenrichtung (12) erstreckt, wobei im Inneren des Türrohlings (10) ein Gießkanal (26) angeordnet ist, welcher eine Eintrittsöffnung und eine Austrittsöffnung aufweist , **dadurch gekennzeichnet, dass** der Gießkanal (26) entlang der Längsachse des Türrohlings (10) verläuft.

12. Türrohling (10) nach Anspruch 11, **dadurch gekennzeichnet, dass** die Eintrittsöffnung aus einem ersten Loch (24) in der oberen Kante (21) des Türrohlings (10) besteht und dass die Austrittsöffnung aus einem zweiten Loch (25) in der unteren Kante (22) des Türrohlings (10) besteht.

13. Türrohling (10) nach einem der Ansprüche 11 bis 12, **dadurch gekennzeichnet, dass** der Türrohling (10) eine Außenplatte (15) und eine Innenplatte (16), die bevorzugt jeweils von einer HPL-Platte (2) gebildet werden, aufweist, und dass sich die Außen- (15) und die Innenplatte (16) entlang der Höhenrichtung (12) über einen zwischen ihnen liegenden Bereich der oberen Kante (21) erstrecken, um in Tiefenrichtung (13) gesehen ein mit Harz-Gemisch befüllbares Volumen (39) entlang der gesamten Erstreckung der oberen Kante (21) in Breitenrichtung (14) zu begrenzen.

14. Verwendung eines Türrohlings (10) nach einem der Ansprüche 11 bis 13 in einem Verfahren gemäß einem der Ansprüche 1 bis 4.

## Claims

1. A method for encapsulating or encasing a preferably profiled scantling core (5), wherein the longitudinal axis of the scantling core (5) extends along a height direction (12), and the cross-section of the scantling core (5) lies normally to the longitudinal axis in a plane which is spanned by a depth direction (13) and a width direction (14), or for encapsulating or encasing a door blank (10), which comprises two lateral edges (23) and a bottom edge (22) and an upper (21) edge, wherein the edges (21, 22, 23) are preferably profiled or folded, and wherein the longitudinal axis of the two lateral edges (23) extends along a height direction (12), having a resin mixture, preferably a polyurethane resin mixture, wherein a mould (27) with the scantling core (5) or door blank (10) situated therein is filled with a predetermined quantity of resin mixture from bottom to top, **characterized in that** the scantling core (5) or the door blank (10) is positioned at least with its bottom edge (22) and the two lateral edges (23) in an aluminium mould (27) which is upwardly open and stands perpendicularly with respect to a base (33), wherein the longitudinal axis of the scantling core (5) or the door blank (10) stands perpendicularly with respect to the base (33), and after a curing period the scantling core (5) or the door blank (10) encapsulated with the cured resin mixture is taken from the aluminium mould (27).

2. A method according to claim 1, **characterized in that** the filling of the aluminium mould (27) occurs via a sprue opening (41) located at the lowermost point of the aluminium mould (27), wherein the sprue opening (41) is closed after filling.

3. A method according to claim 1, **characterized in that** during filling the resin mixture is introduced via a first hole (24) in the upper edge (21) of the door blank (10) into the aluminium mould (27), the resin mixture flows through a casting channel (26) which adjoins the first hole (24), faces perpendicularly in a downward direction and is arranged in the interior of the door blank (10), the resin mixture exits through a second hole (25) in the bottom edge (22) of the door blank (10) into the aluminium mould (27), and rises in the aluminium mould (27) from bottom to top.

4. A method according to one of the claims 1 to 3, **characterized in that** the aluminium mould (27) is preheated to a mould temperature, and the mould temperature is at least 70°C.

5. A mould for carrying out the method according to one of the claims 1 to 4, wherein the mould extends along a height direction (12), depth direction (13) and width direction (14), and is heatable, **characterized in that** the mould consists of aluminium and comprises a first (28) and a second mould half (29), the second mould half (29) is fixed perpendicularly or parallel to the height direction (12) with the longitudinal axis with respect to a base (33), preferably to a wall (32), and the first mould half (28) can be connected to the second mould half (29), preferably in the depth direction (13), in order to form an upwardly open aluminium mould (27) which is otherwise closed.

6. A mould according to claim 5, **characterized in that** the first mould half (28) is rotatably mounted on a hinge pin (30), which extends preferably parallel to the width direction (14), wherein the first mould half (28) can be folded away from the second mould half (29) by rotation of the first mould half (28) about the hinge pin (30) in order to open the aluminium mould (27), or can be folded towards the second mould half (29) in order to close the aluminium mould (27).

7. A mould according to one of the claims 5 to 6, **characterized in that** a scantling core (5) or door blank (10) can be positioned and fixed in the first mould half (28), wherein the first mould half comprises positioning lugs (35), preferably on its inner wall (31), in order to determine a minimum distance between the scantling core (5) or the door blank (10) and the inner wall (31) of the first mould half (28).

8. The use of a resin mixture, comprising a resin which consists of 70 to 85% by weight, preferably 75% by weight, of polyether polyester polyol, in a method according to one of the claims 1 to 4.

9. The use of a resin mixture, comprising a resin which consists of 70 to 85% by weight, preferably 75% by weight, of polyether polyester polyol, and a curing agent, which consists of 75 to 100% by weight of diphenyl methane diisocyanate an/or diphenyl methane diisocyanate isomers and/or diphenyl methane diisocyanate homologs, in a method according to one of the claims 1 to 4.

10. The use of a resin mixture, consisting of a resin which consists of 70 to 85% by weight, preferably 75% by weight, of polyether polyester polyol, and a curing agent, which consists of 75 to 100% by weight of diphenyl methane diisocyanate an/or diphenyl methane diisocyanate isomers and/or diphenyl methane diisocyanate homologs, wherein the resin and the curing agent are mixed in a weight ratio of 100 to 32, in a method according to one of the claims 1 to 4.

11. A door blank (10), which comprises two lateral edges (23) and a bottom (22) and an upper (21) edge, wherein the longitudinal axis of the two lateral edges (23) extends along a height direction (12), wherein a casting channel (26) is arranged in the interior of the door blank (10), which casting channel comprises an inlet opening and an outlet opening, **characterized in that** the casting channel (26) extends along the longitudinal axis of the door blank (10).

12. A door blank (10) according to claim 11, **characterized in that** the inlet opening consists of a first hole (24) in the upper edge (21) of the door blank (10), and the outlet opening consists of a second hole (25) in the bottom edge (22) of the door blank (10).

13. A door blank (10) according to one of the claims 11 to 12, **characterized in that** the door blank (10) comprises an outer panel (15) and an inner panel (16), which are respectively preferably formed by an HPL panel (2), and the outer (15) and the inner panel (16) extend along the height direction (12) via a region of the upper edge (21) that lies in between in order to limit, as seen in the direction of depth (13), a volume (39) that can be filled with a resin mixture along the entire extension of the upper edge (21) in the width direction (14).

14. The use of a door blank (10) according to one of the claims 11 to 13 in a method according to one of the claims 1 to 4.

## Revendications

1. Procédé pour l'enrobage ou le revêtement d'un noyau de carrelet (5), de préférence profilé, dans lequel l'axe longitudinal du noyau de carrelet (5) s'étend le long d'un sens de la hauteur (12) et la section du noyau de carrelet (5) est perpendiculaire à l'axe longitudinal dans un plan défini par un sens de la profondeur (13) et un sens de la largeur (14), ou pour l'enrobage ou le revêtement d'une préforme de porte (10) qui comprend deux arêtes latérales (23) ainsi qu'une arête inférieure (22) et une autre supérieure (21), lesquelles arêtes (21, 22, 23) sont de préférence profilées ou pliées, et dans lequel l'axe longitudinal des deux arêtes latérales (23) s'étend le long d'un sens de la hauteur (12), avec un mélange de résine, de préférence un mélange de résine polyuréthane, dans lequel un moule (27) dans lequel se trouve le noyau de carrelet (5) ou la préforme de porte (10) est rempli d'une quantité prédéterminé de mélange de résine du bas vers le haut, **caractérisé en ce que** le noyau de carrelet (5) ou la préforme de porte (10) est positionné avec au moins son arête inférieure (22) et les deux arêtes latérales (23) dans un moule en aluminium (27) perpendiculaire à un fond (33) et ouvert vers le haut, l'axe longitudinal du noyau de carrelet (5) ou de la préforme de porte (10) étant perpendiculaire au fond (33), et **en ce qu'**après un temps de durcissement, le noyau de carrelet (5) ou la préforme de porte (10) enrobé du mélange de résine durci est retiré du moule en aluminium (27).

2. Procédé selon la revendication 1, **caractérisé en ce que** le remplissage du moule en aluminium (27) s'effectue par une ouverture de coulée (41) qui se trouve au point le plus bas du moule en aluminium (27), laquelle ouverture de coulée (41) est fermée après le remplissage.

3. Procédé selon la revendication 1, **caractérisé en ce que** lors du remplissage, le mélange de résine est introduit dans le moule en aluminium (27) par un premier trou (24) dans l'arête supérieure (21) de la préforme de porte (10) ; **en ce que** le mélange de résine s'écoule par un canal de coulée (26) se raccordant au premier trou (24) et orienté perpendiculairement vers le bas, qui est disposé à l'intérieur de la préforme de porte (10) ; **en ce que** le mélange de résine sort dans le moule en aluminium (27) par un deuxième trou (25) dans l'arête inférieure (22) de la préforme de porte (10) et monte de bas en haut dans le moule en aluminium (27).

4. Procédé selon l'une des revendications 1 à 3, **caractérisé en ce que** le moule en aluminium (27) est préchauffé à une température de moule et **en ce que** la température du moule est d'au moins 70°C.

5. Moule pour la mise en oeuvre d'un procédé selon l'une des revendications 1 à 4, dans lequel le moule s'étend le long d'un sens de la hauteur (12), de la profondeur (13) et de la largeur (14) et peut être chauffé, **caractérisé en ce que** le moule est composé d'aluminium et comprend une première moitié de moule (28) et une deuxième (29) ; **en ce que** la deuxième moitié de moule (29) est fixée perpendiculairement à un fond (33) ou avec son axe longitudinal parallèle au sens de la hauteur (12), de préférence, sur une paroi (32) ; et **en ce que** la première moitié de moule (28) peut être assemblée avec la deuxième moitié de moule (29), de préférence dans le sens de la profondeur (13), afin de former un moule en aluminium (27) ouvert vers le haut et fermé par ailleurs.

6. Moule selon la revendication 5, **caractérisé en ce que** la première moitié de moule (28) est supportée avec possibilité de rotation sur un axe de rotation (30) qui est de préférence parallèle au sens de la largeur (14), la rotation de la première moitié de moule (28) autour de l'axe de rotation (30) pouvant écarter la première moitié de moule (28) de la deuxième moitié de moule (29) pour ouvrir le moule en aluminium (27) ou la rapprocher de la deuxième moitié de moule (29) pour fermer le moule en aluminium (27).

7. Moule selon l'une des revendications 5 à 6, **caractérisé en ce qu'**un noyau de carrelet (5) ou une préforme de porte (10) peut être positionné et fixé dans la première moitié de moule (28), la première moitié de moule présentant, de préférence sur sa paroi intérieure (31), des ergots de positionnement (35) pour définir un écart minimal entre le noyau de carrelet (5) ou la préforme de porte (10) et la paroi intérieure (31) de la première moitié de moule (28).

8. Utilisation d'un mélange de résine comprenant une résine qui se compose à 70 à 80 % en poids, de préférence à 75 % en poids, de polyol de polyéther et de polyester dans un procédé selon l'une des revendications 1 à 4.

9. Utilisation d'un mélange de résine comprenant une résine qui se compose à 70 à 85 % en poids, de préférence à 75 % en poids, de polyol de polyéther et de polyester ainsi que d'un durcisseur qui se compose à 75 à 100 % en poids de diisocyanate de diphénylméthane et/ou d'isomères de diisocyanate de diphénylméthane et/ou d'homologues de diisocyanate de diphénylméthane, dans un procédé selon l'une des revendications 1 à 4.

10. Utilisation d'un mélange de résine comprenant une résine composée à 70 à 85 % en poids, de préférence de 75 % en poids, de polyol de polyéther et de polyester ainsi que d'un durcisseur composé à 75 à 100 % en poids de diisocyanate de diphénylméthane et/ou d'isomères de diisocyanate de diphénylméthane et/ou d'homologues de diisocyanate de diphénylméthane, dans laquelle la résine et le durcisseur sont mélangés dans un rapport de mélange de 100 pour 32, dans un procédé selon l'une des revendications 1 à 4.

11. Préforme de porte (10) comprenant deux arêtes latérales (23) ainsi qu'une arête inférieure (22) et une autre supérieure (21), dans laquelle l'axe longitudinal des deux arêtes latérales (23) s'étend le long d'un sens de la hauteur (12), dans laquelle est disposé à l'intérieur de la préforme de porte (10) un canal de coulée (26) qui présente une ouverture d'entrée et une ouverture de sortie, **caractérisée en ce que** le canal de coulée (26) passe le long de l'axe longitudinal de la préforme de porte (10).

12. Préforme de porte (10) selon la revendication 11, **caractérisée en ce que** l'ouverture d'entrée se compose d'un premier trou (24) dans l'arête supérieure (21) de la préforme de porte (10) et **en ce que** l'ouverture de sortie se compose d'un deuxième trou (25) dans l'arête inférieure (22) de la préforme de porte (10).

13. Préforme de porte (10) selon l'une des revendications 11 à 12, **caractérisée en ce que** la préforme de porte (10) présente un panneau extérieur (15) et un panneau intérieur (16), formés de préférence chacun par un panneau stratifié sous haute pression (2) et **en ce que** le panneau extérieur (15) et le panneau intérieur (16) s'étendent dans le sens de la hauteur (12) sur une zone de l'arête supérieure (21) située entre eux afin de délimiter, vu dans le sens de la profondeur (13), un volume (39) pouvant être rempli avec le mélange de résine le long de toute l'étendue de l'arête supérieure (21) dans le sens de la largeur (14).

14. Utilisation d'une préforme de porte (10) selon l'une des revendications 11 à 13 dans un procédé selon l'une des revendications 1 à 4.
